# DEMANDE DE BREVET EUROPEEN

(11) **EP 1 003 125 A1**
(43) Date de publication de la demande: **24.05.2000**
(21) Numéro de dépôt: 99402564.1
(22) Date de dépôt: 18.10.1999
(51) Int. Cl.: G06K 19/07

(54) **Carte à mémoire sans contact à adaptation de signaux de commande**

(30) Priorité: 21.10.1998 FR 9813203
(71) Demandeur: FRANCE TELECOM, 75015 Paris (FR)
(72) Inventeur: Majos, Jacques, 38420 Le Versoud (FR); Abrial, André, 38420 Le Versoud (FR); Michel, Philippe, 14000 Caen (FR); Thorigne, Yves, 14790 Verson (FR)
(74) Mandataire: Nicolle, Olivier

(57) **Abrégé**

La carte à mémoire sans contact est destinée à être électro-magnétiquement couplée à une station distante pour communiquer des données avec la station. La carte comprend une interface sans contact (IEA), apte à communiquer avec la station selon un protocole de communication asynchrone, et des moyens de traitement de données, propres à mémoriser des données dans une mémoire et contrôler l'accès à la mémoire.

Les moyens de traitement (UTS) sont agencés pour dialoguer selon un protocole de communication synchrone. La carte (CSC) comprend en outre des moyens adaptateurs (ADA) propres à adapter les signaux asynchrones de l'interface de communication (IEA) avec les signaux synchrones des moyens de traitement (UTS) et vice-versa, afin de permettre aux moyens de traitement synchrones (UTS) de communiquer avec la station via une interface de communication sans contact asynchrone (IEA).

## Description

La présente invention concerne les cartes à mémoire sans contact à adaptation de signaux de commande.

Elle trouve une application générale dans les circuits intégrés utilisés dans les cartes à mémoire, et plus particulièrement les télécartes sans contact dans lesquelles un lien électromagnétique (radiofréquence le plus souvent) est établi entre une station distante (lecteur de "publiphone" (Marque déposée)) et une télécarte pour la transmission de données.

Par exemple, dans les Brevets FR 95 07514 et FR 96 04178, la Demanderesse a déjà décrit des télécartes sans contact, du type comprenant une interface sans contact apte à communiquer électromagnétiquement avec une station distante, et des moyens aptes à mémoriser des données dans une mémoire et contrôler l'accès à ladite mémoire.

Dans ce genre de télécarte sans contact, le protocole de communication est de type asynchrone, dans lequel les données binaires sont transmises en série et sont encadrées d'un bit d'en-tête (START) et d'un bit de queue (STOP).

Par ailleurs, on connaît des cartes à mémoire à contacts, telles que les télécartes utilisant des circuits intégrés de type "T2G" (télécartes de la deuxième génération développées par FRANCE TELECOM) ou EUROCHIP (marque déposée par DEUTSCHE TELEKOM).

Dans de telles télécartes à contacts, le dialogue avec la station distante (lecteur de publiphone) s'effectue selon un protocole de communication synchrone, c'est-à-dire que les moyens de traitement de données de la télécarte à contacts sont cadencés au rythme de l'horloge des moyens de traitement de la station distante.

En pratique, le fonctionnement interne d'une télécarte à contacts est basé sur une logique de contrôle (séquenceur) qui gère une mémoire de type EEPROM (mémoire non volatile réinscriptible). Les instructions disponibles sur une télécarte à contacts sont essentiellement la lecture avec incrémentation du compteur d'adresses, l'écriture en zone mémoire et la remise à zéro du compteur d'adresses. Ces instructions sont mises en place au moyen de deux signaux de commande (dans le cas du circuit intégré EUROCHIP) ou trois signaux de commande (dans le cas du circuit intégré T2G).

La technique des télécartes à contacts est avantageuse en raison de la maturité technologique des circuits intégrés utilisés (T2G ou EUROCHIP), notamment en matière de sécurisation de données.

Néanmoins, la technologie à contacts présente des inconvénients résultant de l'introduction répétée des télécartes qui provoque une dégradation des contacts du lecteur du publiphone (usure mécanique, oxydation). Cette dégradation induit en outre des coûts de maintenance élevés, nécessitant en pratique au moins deux interventions par an sur site. De plus, le procédé de fabrication des télécartes à contacts est lourd et coûteux dans la mesure où il nécessite tout d'abord d'insérer le composant micro-électronique (circuit intégré ou puce) dans un module, de connecter ensuite la puce au plot du module selon une technique filaire propre à la micro-électronique et enfin de placer le module dans la télécarte.

En revanche, la technologie sans contact telle que décrite dans le Brevet FR 95 07514, présente l'avantage de réduire les opérations d'encartage à une simple insertion du composant micro-électronique au sein du support plastique de la télécarte. De plus, la technologie sans contact diminue les coûts de maintenance des publiphones dans la mesure où l'usure mécanique des contacts ainsi que leur oxydation sont supprimées.

La Demanderesse s'est donc posée le problème d'utiliser des circuits intégrés existants, issus de la technologie à contacts pour réaliser de façon efficace, rapide et non dispendieuse, une télécarte sans contact.

La présente invention a pour objet d'apporter une solution à ce problème.

Elle porte sur une carte à mémoire sans contact destinée à être électromagnétiquement couplée à une station distante pour communiquer des données avec la station, ladite carte étant du type comprenant :
- une interface sans contact, apte à communiquer avec la station selon un protocole de communication asynchrone, et
- des moyens de traitement de données, propres à mémoriser des données dans une carte et contrôler l'accès à la mémoire.

Selon une définition générale de l'invention, les moyens de traitement sont agencés pour dialoguer selon un protocole de communication synchrone, et la carte comprend en outre des moyens adaptateurs propres à adapter les signaux asynchrones de l'interface de communication avec les signaux synchrones des moyens de traitement et vice-versa, afin de permettre aux moyens de traitement synchrones de communiquer avec la station via une interface de communication asynchrone.

En raison de l'utilisation de composants micro-électroniques existants, issus de la technologie à contacts, la mise en oeuvre de la télécarte sans contact selon l'invention est avantageusement relativement facile et peu dispendieuse. De plus, la surface rendue disponible par la suppression des contacts est avantageusement utilisée pour loger les moyens adaptateurs, ce qui simplifie et facilite leur intégration micro-électronique.

On entend ici par carte à mémoire tout objet, de préférence portatif, susceptible d'être doté d'une mémoire et de moyens d'accès à cette mémoire, tel qu'une télécarte, badge, étiquette, jeton, ou analogue.

D'autres caractéristiques et avantages de l'invention apparaîtront à la lumière de la description détaillée ci-après et des dessins dans lesquels:
- la figure 1 représente schématiquement les moyens essentiels d'une carte sans contact de l'état de la technique.
- les figures 2A à 2F sont des chronogrammes illustrant les signaux d'une interface radiofréquence de la carte sans contact de la figure 1;
- la figure 3 décrit schématiquement une carte sans contact équipée de moyens adaptateurs selon l'invention;
- la figure 4 représente un schéma équivalent général des moyens adaptateurs selon l'invention;
- la figure 5 représente schématiquement les moyens détecteurs du bit d'en-tête (START) précédant les données binaires du protocole asynchrone selon l'invention;
- la figure 6 représente schématiquement les moyens diviseurs de fréquence selon l'invention;
- la figure 7 représente schématiquement les moyens séquenceurs selon l'invention; et
- la figure 8 représente schématiquement les moyens émetteurs selon l'invention.

La description détaillée ci-après, et les dessins annexés contiennent, pour l'essentiel, des éléments de caractère certain. Ils pourront donc, non seulement servir à mieux faire comprendre l'invention, mais aussi contribuer à sa définition, le cas échéant.

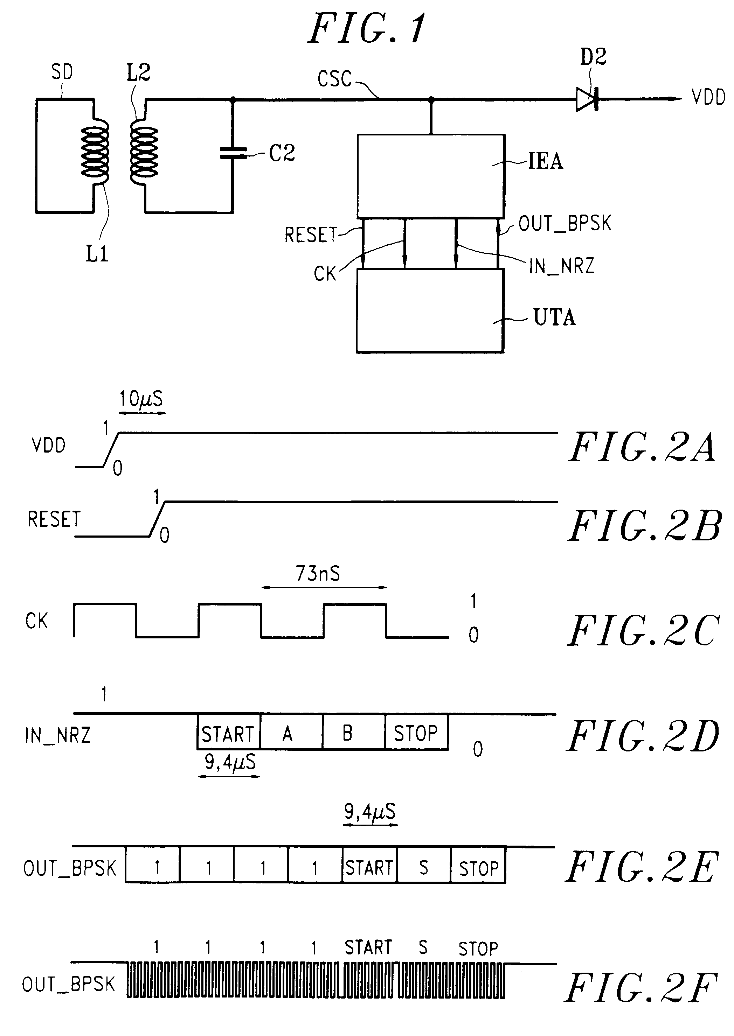

En référence à la figure 1, une carte à mémoire sans contact CSC de l'état de la technique est couplée électromagnétiquement avec un lecteur d'une station distante SD. La station distante comprend une antenne L1, apte à être couplée électromagnétiquement à une antenne (inductance ou bobine) L2 de la carte sans contact CSC. La station distante est, par exemple, un lecteur de publiphone et la carte sans contact est, par exemple, une télécarte téléphonique.

Une carte à mémoire sans contact est soit active (elle contient alors une source d'énergie interne), soit passive (elle reçoit alors l'énergie dont elle a besoin de la station distante). La présente invention s'applique à ces deux types de cartes, même si elle est de préférence destinée aux cartes sans contact passives.

L'article "l'écho des RECHERCHES, n°158, 4 trimestre 1994, Nouvelle technologie de la carte à mémoire: la carte sans contact, Y. THORIGNE, R. REITTER", décrit le principe de fonctionnement d'une carte à mémoire sans contact. En bref, il repose sur le couplage de l'antenne L1 du lecteur réalisé sous la forme d'une boucle parcourue par courant, d'une part, et le dipôle magnétique de la carte CSC constitué par les spires de l'antenne L2, d'autre part. Le couplage inductif se définit par la mutuelle inductance, entre les circuits L1 et L2. Le circuit oscillant de la carte CSC est caractérisé par l'inductance L2, le condensateur C2 de l'antenne et la résistance de perte (non représentée). La tension induite dans l'inductance L2 est redressée par un pont redresseur D2 pour constituer une tension d'alimentation VDD dans le cas d'une carte sans contact passive.

La transmission de données dans le sens carte CSC vers lecteur SD réside dans la variation d'accord du circuit oscillant de la carte CSC. Par exemple, le circuit oscillant s'accorde et se désaccorde au rythme d'un train binaire envoyé par des moyens de traitement UTA de la carte CSC via une interface électronique analogique IEA. Par exemple, l'interface électronique analogique IEA comprend un transistor (non représenté), placé en parallèle sur le condensateur C2 du circuit oscillant, et qui commute une charge résistive (non représentée) pour moduler la valeur de l'impédance ramenée en parallèle du circuit oscillant de la carte CSC. Sur l'antenne L1 du lecteur SD, il s'ensuit une variation d'impédance qui se traduit par une modulation d'amplitude de la tension aux bornes de l'antenne L1.

La transmission des données du lecteur SD vers la carte CSC peut être mise en oeuvre selon plusieurs types de modulation. Par exemple, la modulation d'amplitude est obtenue en agissant directement sur l'émission du générateur de tension du lecteur SD dans l'antenne L1 dudit lecteur, la démodulation dans la carte CSC s'effectuant alors par détection d'enveloppe. Dans le cas où le même signal assure la téléalimentation et le transfert de données, la modulation de phase ou de fréquence peut être préférée à la modulation d'amplitude de façon à rendre constante l'énergie reçue sur la carte.

La mémoire de la carte sans contact est avantageusement de type EEPROM (mémoire non volatile réinscriptible). L'accès à cette mémoire est contrôlé par des moyens de traitement classiques dont les spécifications détaillées ne sont pas ici décrites, notamment en raison de certaines applications sécurisées. Pour l'essentiel, les instructions des moyens de contrôle sont la lecture avec incrémentation du compteur d'adresses, l'écriture en zone mémoire et la remise à zéro du compteur d'adresses.

En référence à la figure 2A, le signal d'alimentation VDD de la carte sans contact passe à l'état actif lorsque la récupération de l'énergie est établie en présence d'un champ électromagnétique (ici radiofréquence) prédéterminé émanant de la station distante.

En référence à la figure 2B, le signal de remise à zéro du compteur d'adresses RESET est actif à 0. Il est relâché (passage à 1) 10 microsecondes après que le signal d'alimentation VDD se soit établi.

En référence à la figure 2C, le signal d'horloge CK récupéré par l'interface électronique analogique IEA a une fréquence de 13,56 MHz, c'est à dire une période de 73 ns.

En référence à la figure 2D, le signal de réception de données IN_NRZ (codage binaire non retour à zéro) est issu d'un signal de modulation d'amplitude de type ASK (Amplitude Shift Keying) avec un taux de modulation voisin de 10%. Le débit est de l'ordre de 106 Kbits/s. La période d'un bit est de 9,4 microsecondes. La transmission des données d'une carte sans contact telle que celle décrite en référence à la figure 1, est asynchrone, de type liaison série avec un bit d'en tête ou "START", n bits de données S et un bit de queue ou "stop". La vitesse de transmission est par exemple de 106 Kbits/s. La transmission est en half-duplex. En l'absence de réception de données, la ligne IN_NRZ est à l'état binaire "1".

En référence aux figures 2E et 2F, le signal d'émission de données OUT_BPSK (lecture) est le résultat d'une modulation en phase de type BPSK (Binary Phase Shift Keying) d'une sous-porteuse à 847,5 KHz, avec un débit de 106 Kbits/s. En l'absence de message, la ligne OUT_BPSK est à 1. Le bit de "START" est précédé de quatre bits à "1". Le bit de données S porte la valeur lue sur la carte. Si la valeur du bit de données est à "1", la porteuse est transmise sans changement de phase tandis que si la valeur du bit de données est à "0", la phase de la porteuse est inversée.

En référence à la figure 2F, le bit de données S vaut "1".

Il convient de remarquer que les signaux décrits en référence aux figures 2A à 2F correspondent à ceux d'une carte sans contact de l'état de la technique.

Par ailleurs, les moyens de traitement synchrones utilisant des circuits intégrés de type T2G ou EUROCHIP sont basés sur une logique de contrôle (séquenceur) dont les instructions sont également la lecture avec incrémentation du compteur d'adresses, l'écriture en zone mémoire et la remise à zéro du compteur d'adresses. De façon classique, ces instructions sont mises en place au moyen de deux signaux de commande A et Strobe ST (dans le cas du circuit intégré EUROCHIP) ou trois signaux de commande A, B, et ST (dans le cas du circuit intégré T2G).

En raison de certaines applications sécurisées, les chronogrammes des signaux de commande des composants T2G et EUROCHIP ne sont pas décrits ici. Cependant, ces chronogrammes sont disponibles dans des spécifications techniques accessibles à l'Homme du métier.

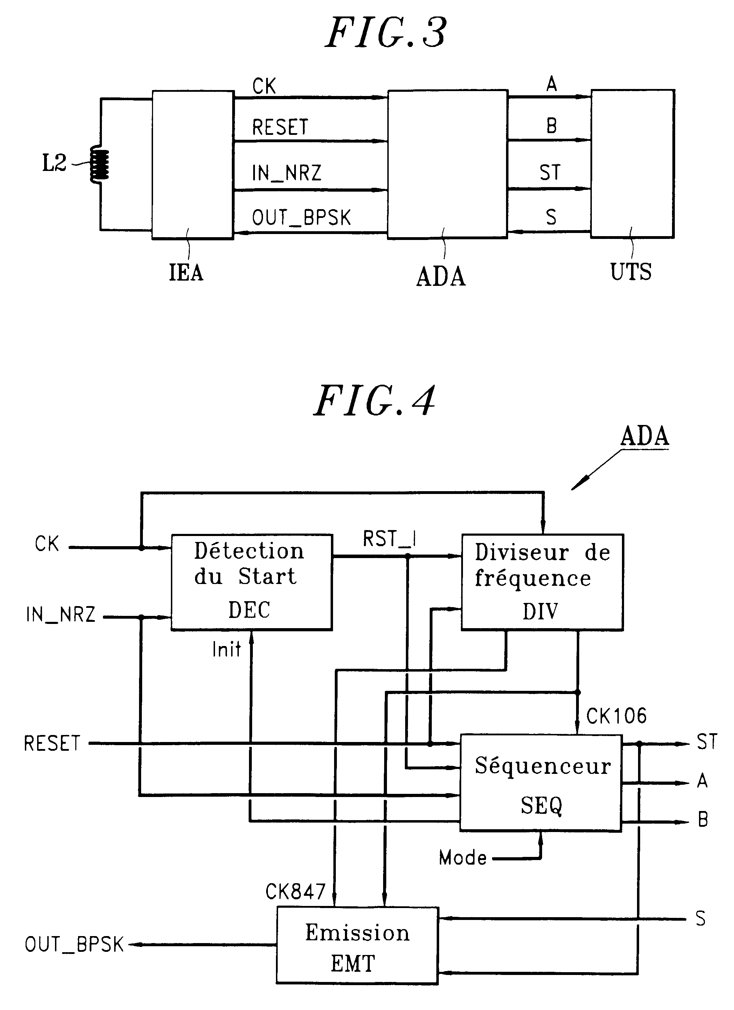

En référence à la figure 3, les moyens adaptateurs ADA selon l'invention réalisent l'interface entre les signaux fournis par l'interface radiofréquence IEA et les entrées/sorties des moyens de traitement synchrones UTS constitués en pratique par un circuit intégré T2G ou EUROCHIP.

Avantageusement, la carte sans contact CSC selon l'invention ne comprend pas de surface occupée par des plots de contacts. Cette surface ainsi rendue disponible par rapport à une carte à contacts est utilisée pour loger les moyens adaptateurs ADA, ce qui facilite et simplifie leur intégration micro-électronique dans une carte dont les circuits de traitement sont issus de la technologie à contacts tels que les circuits T2G ou EUROCHIP.

En référence à la figure 4, les moyens adaptateurs ADA sont constitués de quatre blocs principaux, à savoir des moyens détecteurs DEC du bit d'en-tête (START), des moyens diviseurs de fréquence DIV, des moyens séquenceurs SEQ, et des moyens émetteurs EMT.

En bref, les moyens détecteurs DEC détectent le premier état à "0" du signal IN_NRZ transmis par l'interface radiofréquence IEA. Cette détection initialise les moyens diviseurs de fréquence DIV et les moyens séquenceurs SEQ.

La détection du bit d'en-tête (START) est avantageusement contrôlée pour ne pas initialiser les moyens séquenceurs SEQ à tort. Pour cela, un filtre temporel est utilisé pour filtrer les impulsions dont la largeur est inférieure à 140 ns. Un deuxième filtre temporel, implémenté dans les moyens séquenceurs SEQ, vérifie que l'état du bit de START ainsi détecté a une durée supérieure à 4,8 µs. Si ce n'est pas le cas, les moyens séquenceurs SEQ restent dans un état d'attente du bit de START.

En bref, les moyens diviseurs DIV élaborent deux signaux d'horloge à partir de l'horloge CK à 13,5 MHz produite par l'interface radiofréquence IEA.

Dans un premier temps, l'horloge CK est divisée par 16 et ensuite par 8 pour obtenir respectivement une horloge CK847 à 847 kHz et une horloge CK106 à 106 kHz. L'horloge CK847 est utilisée par les moyens émetteurs EMT, et l'horloge CK106 cadence les moyens séquenceurs SEQ et les moyens émetteurs EMT.

Les moyens séquenceurs SEQ élaborent les signaux de commande A, B et ST pour piloter un circuit intégré de type T2G ou les signaux A et ST pour piloter un circuit intégré de type EUROCHIP, suivant respectivement la valeur programmée sur l'entrée dite MODE.

La programmation "EUROCHIP" ou "T2G" est effectuée par un masque dans une réalisation intégrée sur silicium.

Les moyens émetteurs EMT transmettent une séquence numérique contenant un préambule de quatre états logiques à "1", suivi d'un état à "0" pour indiquer le bit d'en-tête (START), puis du signal de données S et, enfin, la séquence est terminée par le signal de queue (STOP) codé à "1" (figures 2E et 2F). Le temps bit de cette séquence est égal à la période de l'horloge CK106. Le codage des "1" et "0" est réalisé par une modulation de phase de l'horloge CK847. La séquence est déclenchée par le front descendant du signal de commande ST.

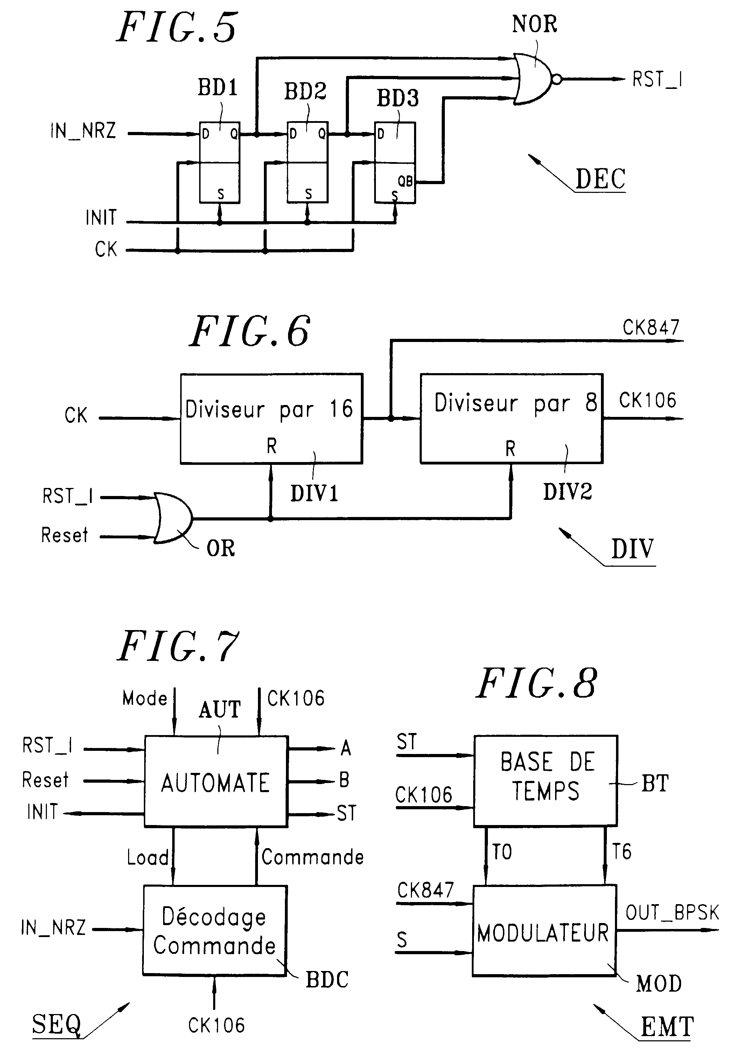

En référence à la figure 5, les moyens détecteurs DEC comprennent une entrée recevant le signal d'horloge locale CK émanant de l'interface de communication IEA, une entrée recevant le signal de réception IN_NRZ émanant de l'interface de communication IEA, une entrée recevant le signal d'initialisation INIT émanant des moyens séquenceurs SEQ, et une sortie délivrant le signal d'activation RST_1 destiné à initialiser les moyens séquenceurs SEQ et les moyens diviseurs DIV.

Par exemple, les moyens détecteurs DEC comprennent trois bascules de type D, individualisées en BD1 à BD3. L'entrée D de la bascule BD1 reçoit le signal IN_NRZ. L'entrée D de la bascule BD2 reçoit le signal de sortie Q de la bascule BD1. L'entrée D de la bascule BD3 reçoit le signal de sortie Q de la bascule BD2. L'entrée Horloge de chaque bascule est cadencée par l'horloge CK. L'entrée "CLEAR" de chaque bascule est initialisée par le signal INIT. La sortie Q de chaque bascule est appliquée à une porte NOR dont la sortie délivre le signal RST_1 à l'état "0" si l'une des entrées Q est à l'état "1".

Fonctionnellement, la détection du bit d'en-tête (START) est réalisée en échantillonnant le signal IN_NRZ avec l'horloge CK. L'analyse de deux échantillons consécutifs à l'état "0" engendre une impulsion RST_1 qui initialise les moyens séquenceurs SEQ et les moyens diviseurs DIV.

Si T est la période de l'horloge CK, alors tout état binaire à "0" du signal IN_NRZ inférieur à 2 T est ignoré. Si la détection d'un état binaire à "0" est validée par les moyens séquenceurs SEQ, alors l'état du bit d'en-tête (START) du signal IN_NRZ est validé et l'entrée INIT des moyens détecteurs est forcée à "1" pendant tout le traitement de la commande reçue.

En référence à la figure 6, les moyens diviseurs DIV du signal d'horloge locale CK comprennent une entrée recevant le signal d'horloge locale CK émanant de l'interface de communication IEA, une entrée recevant le signal de remise à zéro RESET émanant de l'interface de communication IEA, une entrée recevant un signal d'activation RST_1 émanant des moyens détecteurs DEC, une sortie délivrant le signal d'horloge locale CK847, et une sortie délivrant le signal d'horloge locale CK106.

Les moyens diviseurs DIV sont initialisés par les signaux RESET et RST_1.

Le signal d'horloge locale CK847 est destiné à être utilisé par les moyens émetteurs EMT et le signal d'horloge locale CK106 est destiné à cadencer les moyens séquenceurs SEQ et les moyens émetteurs EMT.

En pratique, les moyens diviseurs DIV comprennent deux diviseurs de fréquence DIV1 et DIV2, de type asynchrone, pour minimiser le nombre de portes. Le premier diviseur DIV1 est un diviseur par 16 réalisé avec 4 bascules de type D (non représentées), montées chacune en diviseurs par 2. Ce premier diviseur DIV1, commandé par l'horloge CK à 13,5 MHz, délivre une horloge CK847 à 847 kHz. Cette horloge CK847 commande le deuxième diviseur DIV2, qui a un diviseur par 8, constitué de trois bascules D (non représentées) montées aussi en diviseur par 2. Ce deuxième diviseur DIV2 délivre l'horloge CK106 à 106 kHz.

L'entrée R de chaque diviseur DIV1 et DIV2 est initialisée par le signal de sortie d'une porte OR dont les entrées reçoivent le signal RESET fourni par l'interface radio IEA et l'impulsion RST_1 engendrée par la détection du bit d'en-tête (START).

En référence à la figure 7, les moyens séquenceurs SEQ comprennent une entrée recevant le signal d'horloge locale CK106 émanant des moyens diviseurs DIV, une entrée recevant le signal RESET émanant de l'interface de communication IEA, une entrée recevant le signal RST_1 émanant des moyens détecteurs DEC, une entrée recevant le signal de réception de données IN_NRZ émanant de l'interface de communication, une sortie délivrant le signal d'initialisation INIT, une sortie délivrant le signal de commande ST, et une sortie délivrant le signal de commande A et/ou B.

Les moyens séquenceurs SEQ sont initialisés par les signaux RESET et RST_1.

A la cadence du signal d'horloge locale CK106, les moyens séquenceurs SEQ délivrent les signaux de commande ST, A et/ou B et le signal d'initialisation INIT.

En pratique, les moyens séquenceurs SEQ sont constitués d'un automate AUT cadencé par l'horloge CK106 et d'un bloc de décodage BDC qui reçoit le signal IN_NRZ émis par l'interface radiofréquence. Le bloc de décodage BDC, à la réception d'un signal de chargement "LOAD" mémorise le message IN_NRZ reçu et le décode pour transmettre à l'automate AUT l'ordre VAL d'effectuer une instruction RESET, lecture ou écriture, qui sont les trois instructions essentielles que peut exécuter un circuit T2G ou EUROCHIP.

En pratique, l'automate AUT est initialisé à la mise sous tension par le signal RESET émis par l'interface radiofréquence IEA. Sur la réception du signal RST_1, l'automate AUT vérifie la durée du signal d'en-tête (START) pour valider ou non la réception. Pour cela, le signal IN_NRZ est lu par l'automate AUT sur le front montant de l'horloge CK106. Si l'état binaire "0" est confirmé, un cycle complet de lecture, d'écriture, ou de RESET, suivant la commande décodée, est démarré. (L'instruction RESET correspond à la remise à zéro du compteur d'adresse et à la lecture du premier élément binaire de la zone mémoire).

Le signal MODE permet à l'automate AUT d'engendrer les signaux A, B, et ST, conformément au protocole de communication du circuit T2G ou EUROCHIP, suivant son état respectivement 0 ou 1.

Les moyens séquenceurs SEQ, pendant tout le traitement d'une instruction, maintiennent avec le signal INIT, les moyens détecteurs DEC à l'état inactif, en le forçant dans l'état d'attente du signal du bit d'en-tête (START).

Il est à remarquer que les moyens séquenceurs SEQ permettent de gérer l'asynchronisme introduit par le protocole de communication radiofréquence.

En référence à la figure 8, les moyens émetteurs EMT comprennent une base de temps BT et des moyens modulateurs MOD.

La base de temps BT comprend une entrée recevant le signal de commande ST émanant du bloc automate AUT, une entrée recevant le signal CK106, et des sorties T0 à T6 cadencées par le signal d'horloge CK106 et activées par le signal de commande ST.

Les moyens modulateurs MOD comprennent une entrée recevant le signal CK847, une entrée recevant le signal de données S, des entrées reliées aux sorties T0 à T6 de la base de temps BT et une sortie délivrant une séquence binaire correspondant au signal d'émission OUT_BPSK dont le temps bit est égal à la période du signal CK106 et dont le codage binaire est réalisé par une modulation de phase du signal CK847.

En pratique, la base de temps BT est du type compteur JOHNSON à 7 états, individualisés T0 à T6. La base de temps BT est cadencée par l'horloge CK106 et activée par le signal STROBE ST.

Le modulateur MOD applique différents signaux sur la sortie OUT_BPSK.

De l'état T0 à l'état T3, le modulateur applique l'horloge CK847. Cela correspond à un codage de quatre bits à "1".

Pendant l'état T4, le modulateur applique le complément de CK847 pour coder le bit d'en-tête (START).

Sur l'état T5, le modulateur applique l'horloge CK847 ou son complément, suivant que la valeur du bit de données S est à 1 ou 0.

Pendant l'état T6, le modulateur applique l'horloge CK847, ce qui correspond au codage du bit de queue (STOP).

En dehors de la séquence d'émission, la sortie OUT_BPSK est maintenue à la valeur de la tension d'alimentation VDD. Il est à remarquer que suivant la longueur du préambule ou de la redondance introduite dans le champ de données, la séquence d'émission peut être plus ou moins longue.

Avantageusement, pour minimiser les erreurs de transmission, il est possible d'introduire un bit de parité dans le message.

Dans le cas où une erreur de parité est détectée par le lecteur de carte SD, ledit lecteur SD demande à la carte CSC de lui envoyer à nouveau un message. Dans le cas de l'écriture et de la lecture, il faut alors recommencer le cycle par une remise à zéro du compteur d'adresses pour recaler le pointeur.

Dans le cas d'une erreur de parité détectée par la carte CSC, ladite carte CSC ne répond rien et n'enclenche aucune opération. Le lecteur de carte SD enclenche alors une temporisation à l'issue de laquelle le lecteur de carte SD renvoie le même message, sans remise à zéro du compteur d'adresses.

## Revendications

1. Carte à mémoire sans contact destinée à être électromagnétiquement couplée à une station distante pour communiquer des données avec la station, ladite carte étant du type comprenant:
- une interface sans contact (IEA), apte à communiquer avec la station selon un protocole de communication asynchrone, et
- des moyens de traitement de données, propres à mémoriser des données dans une mémoire et contrôler l'accès à la mémoire,
caractérisée en ce que les moyens de traitement (UTS) sont agencés pour dialoguer selon un protocole de communication synchrone, et en ce que la carte (CSC) comprend en outre des moyens adaptateurs (ADA) propres à adapter les signaux asynchrones de l'interface de communication (IEA) avec les signaux synchrones des moyens de traitement (UTS) et vice-versa, afin de permettre aux moyens de traitement synchrones (UTS) de communiquer avec la station (SD) via une interface de communication sans contact asynchrone (IEA).

2. Carte selon la revendication 1, caractérisée en ce que les signaux asynchrones comprennent au moins un signal de remise à zéro du compteur d'adresses de la mémoire (RESET), un signal d'horloge locale (CK), un signal de réception de données (IN_NRZ), et un signal d'émission de données (OUT_BP-SK).

3. Carte selon la revendication 2, caractérisée en ce que le signal de réception de données (IN_NRZ) est du type à modulation d'amplitude.

4. Carte selon la revendication 2, caractérisée en ce que le signal d'émission de données (OUT_BPSK) est du type à modulation en phase d'une sous-porteuse.

5. Carte selon la revendication 1, caractérisée en ce que les signaux synchrones des moyens de traitement (UTS) comprennent au moins des premier et second signaux de commande (ST, A et/ou B) propres à assurer la lecture de données avec incrémentation d'un compteur d'adresses, l'écriture de données, et la remise à zéro du compteur d'adresses de la mémoire.

6. Carte selon les revendications 1, 2 et 5, caractérisée en ce que les moyens adaptateurs (ADA) comprennent:
- des moyens détecteurs (DEC) du signal de réception (IN_NRZ) émanant de l'interface de communication (IEA),
- des moyens séquenceurs (SEQ) propres, en réponse à la détection du signal de réception (IN_NRZ), à élaborer et délivrer les premier et second signaux de commande (ST, A et/ou B) aux moyens de traitement (UTS), et
- des moyens émetteurs (EMT) propres, en réponse aux premier et second signaux de commande (ST, A et/ou B) émanant des moyens de traitement (UTS), à délivrer le signal d'émission de données (OUT_BPSK) à l'interface de communication (IEA).

7. Carte selon la revendication 6, caractérisée en ce que les moyens adaptateurs (ADA) comprennent en outre des moyens diviseurs (DIV) du signal d'horloge locale (CK) possédant:
- une première entrée recevant le signal d'horloge locale (CK) émanant de l'interface de communication (IEA),
- une seconde entrée recevant le signal de remise à zéro du compteur d'adresses (RESET) émanant de l'interface de communication (IEA),
- une troisième entrée recevant un signal d'activation (RST_1) émanant des moyens détecteurs (DEC),
- une première sortie délivrant un premier sous multiple du signal d'horloge locale (CK847), et
- une seconde sortie délivrant un second sous multiple du signal d'horloge locale (CK106),
les moyens diviseurs (DIV) étant initialisés par le signal de remise à zéro (RESET) et le signal d'activation (RST_1), le premier sous multiple du signal d'horloge locale (CK847) étant destiné à être utilisé par les moyens émetteurs (EMT) et le second sous multiple du signal d'horloge locale (CK106) étant destiné à cadencer les moyens séquenceurs (SEQ) et les moyens émetteurs (EMT).

8. Carte selon les revendications 6 et 7, caractérisée en ce que les moyens séquenceurs (SEQ) comprennent:
- une première entrée recevant le second sous multiple du signal d'horloge locale (CK106) émanant des moyens diviseurs (DIV),
- une seconde entrée recevant le signal de remise à zéro (RESET) émanant de l'interface de communication (IEA),
- une troisième entrée recevant le signal d'activation (RST_1) émanant des moyens détecteurs (DEC),
- une quatrième entrée recevant le signal de réception de données (IN_NRZ) émanant de l'interface de communication (IEA),
- une première sortie délivrant un signal d'initialisation (INIT),
- une seconde sortie délivrant le premier signal de commande (ST),
- une troisième sortie délivrant le second signal de commande (A et/ou B),
les moyens séquenceurs (SEQ) étant initialisés par le signal d'activation (RST_1) et le signal de remise à zéro (RESET), et étant propres, à la cadence du second sous multiple du signal d'horloge locale (CK106), à délivrer les premier et second signaux de commande (ST, A et/ou B) et le signal d'initialisation (INIT).

9. Carte selon les revendications 6 à 8, caractérisée en ce que les moyens détecteurs (DEC) comprennent:
- une première entrée recevant le signal d'horloge locale (CK) émanant de l'interface de communication (IEA),
- une seconde entrée recevant le signal de réception (IN_NRZ) émanant de l'interface de communication (IEA),
- une troisième entrée recevant le signal d'initialisation (INIT) émanant des moyens séquenceurs (SEQ), et
- une sortie délivrant le signal d'activation (RST_1) destiné à initialiser les moyens séquenceurs (SEQ) et les moyens diviseurs (DIV).

10. Carte selon les revendications 6 à 9, caractérisée en ce que les moyens séquenceurs (SEQ) comprennent:
- des moyens décodeurs (BDC) possédant une première entrée recevant le second sous multiple du signal d'horloge locale (CK106), une seconde entrée recevant le signal de réception (IN_NRZ), une troisième entrée recevant un signal de chargement (LOAD), et une sortie délivrant un signal de commande (COM),
- des moyens formant automate (AUT) possédant une première entrée recevant le second sous multiple du signal d'horloge locale (CK106), une seconde entrée recevant le signal d'activation (RST_1), une troisième entrée recevant le signal de remise à zéro (RESET), une quatrième entrée recevant le signal de commande (COM) émanant des moyens décodeurs, une première sortie délivrant le premier signal de commande (ST), une seconde sortie délivrant le second signal de commande (A et/ou B), et une troisième sortie délivrant le signal de chargement (LOAD),
après initialisation (RESET et RST_1), les moyens formant automate (AUT) étant propres à envoyer le signal de chargement (LOAD) aux moyens détecteurs (BDC) qui en réponse mémorisent le signal de réception (IN_NRZ), le décodent, et en fonction du décodage, envoient le signal de commande (COM) aux moyens formant automate (AUT) qui en réponse délivrent les premier et second signaux de commande (ST, A et/ou B).

11. Carte selon la revendication 10, caractérisée en ce que les moyens formant automate (AUT) comprennent en outre une entrée (MODE) recevant un signal de programmation destiné à déterminer le second signal de commande (A et/ou B).

12. Carte selon les revendications 6 et 7, caractérisée en ce que les moyens émetteurs (EMT) comprennent:
- une base de temps (BT) possédant une première entrée recevant le premier signal de commande (ST) émanant des moyens formant automate (AUT), une seconde entrée recevant le second sous multiple du signal d'horloge locale (CK106), et des sorties (T0 à T6) cadencées par le second sous multiple du signal d'horloge (CK106) et activées par le premier signal de commande (ST), et
- des moyens modulateurs (MOD) possédant une première entrée recevant le premier sous multiple du signal d'horloge locale (CK847), une seconde entrée recevant le signal de données (S), des entrées reliées aux sorties (T0 à T6) de la base de temps (BD) et une sortie délivrant une séquence binaire correspondant au signal d'émission (OUT_BPSK) dont le temps bit est égal à la période du second sous multiple du signal d'horloge locale (CK106) et dont le codage binaire est réalisé par une modulation de phase du premier sous multiple du signal d'horloge locale (CK847).

13. Carte selon la revendication 1, caractérisée en ce que la mémoire est réinscriptible telle que du type EEPROM.
